# EUROPÄISCHE PATENTANMELDUNG

(11) **EP 2 258 481 A2**
(43) Veröffentlichungstag der Anmeldung: **08.12.2010**
(21) Anmeldenummer: 10009331.9
(22) Anmeldetag: 25.04.2006
(51) Int. Cl.: B01L 3/00, G01N 30/60

(54) **Adapter**

(30) Priorität: 03.05.2005 DE 102005020983; 08.06.2005 DE 102005026585
(62) Teilanmeldung aus: 06722826.2
(71) Anmelder: Forschungszentrum Jülich GmbH, 52425 Jülich (DE)
(72) Erfinder: Hubbuch, Jürgen, 76135 Kalrsruhe (DE); Schroeder, Tim, 52349 Düren (DE); Beugré, Piere, 40223 Düsseldorf (DE); Wiendahl, Matthias, 3400 Hillerød (DK)

(57) **Zusammenfassung**

Die Erfindung betrifft einen Adapter.

Der erfindungsgemäße Adapter 1 ist so ausgebildet, dass er eine flüssigkeitsdichte Aufnahme einer Spritzennadel ermöglich. Er ist flüssigkeitsdicht mit dem darunter liegenden Modul oder Kit (20) verbunden und ermöglicht einen kontinuierlichen Durchfluss von Proben.

## Beschreibung

Die Erfindung betrifft einen Adapter.

Unter einem Modul soll je nach Anwendungszweck auch ein Kit zu verstehen sein.

Im Laborbetrieb, insbesondere bei Hochdurchsatz-Screening (HTS) Methoden, werden flüssige Proben nach dem Stand der Technik mittels Pipettierstationen Modulen, insbesondere Kits zugeführt, in denen die flüssigen Proben beispielsweise filtriert, adsorbiert oder eluiert werden. Unter einem Modul wird dabei ein offener Behälter mit Aus- und Eintritt für Flüssigkeiten beispielsweise, aber nicht beschränkend, von säulenförmiger Form verstanden, welcher mit einer stationären porösen Festphase gefüllt ist. Insbesondere ist unter einem Modul ein Kit zu verstehen. Der Boden dieses Gefäßes ist flüssigkeitsdurchlässig. Die Festphase kann unterschiedlich ausgestaltet sein und kann beispielsweise, aber nicht beschränkend, ein Filter, eine Membran, ein flüssigkeitsverteilendes oder ein chromatographisches Trägermaterial sein. Die aufgegebene Flüssigkeit durchströmt die poröse Festphase und verlässt das Modul über einen Auslass am Boden des Moduls. Die austretende Flüssigkeit wird in der Regel in einem Auffanggefäß gesammelt. Je nach Verwendungszweck wird unter einem Modul ein Kit verstanden, beispielsweise aber nicht beschräkend für die Aufreinigung von Makromolekülen (Proteinen oder Nukleinsäuren), Filtration von Suspensionen, Kultivierung von Zellen oder in der Medizintechnik. Anwendungen finden sich beispielsweise bei der Aufarbeitung von Produkten aus biotechnologischen Prozessen, Aufreinigung von Proteinen oder in der Medizintechnik, z. B. bei der Analyse von Blutproben.

Die Triebkraft, die die Flüssigkeit durch die poröse Festphase fließen lässt, wird entweder durch Zentrifugation oder Anlegen eines Vakuums bzw. Überdrucks aufgebracht. Der Überdruck wird oben am Eingang des Moduls angelegt, das Vakuum wird unten am Ausgang des Moduls angelegt.

Die Proben werden typischerweise im Batch-Betrieb in die Module aufgegeben Das Probenvolumen, das in das Modul aufgegeben werden kann, ist durch das Volumen der Module beschränkt. Soll ein größeres Probenvolumen als das Volumen des Moduls aufgegeben werden, muss die Probenaufgabe Absatzweise erfolgen. Ein Teil des Probenvolumens wird aufgegeben, und das Probenvolumen wird durch Aufbringen einer Triebkraft durch das Modul fließen gelassen. Dieser Vorgang wird so oft wiederholt, bis das gesamte Probenvolumen appliziert worden ist.

Bei dem standardmäßig eingesetzten Modul handelt es sich in der Regel um zylindrisch oder konisch ausgebildete Gefäße mit Einlagen. Letztere können Bodeneinlagen wie Filter oder Membranen sein, aber auch chromatographische Materialen Sämtliche Einlagen sind kommerziell erhältlich. Die Erfindung richtet sich insbesondere auf den Umgang mit kommerzielle Modulen, sie soll jedoch nicht auf deren Gebrauch beschränkt sein.

Im Folgenden wird der Begriff Pipettiernadel verwendet, er umfasst allerdings auch andere im Wesentlichen nadelförmige Konstruktionen, wie zum Beispiel Pipettenspitzen, durch die Proben dosiert werden können. Nach dem Stand der Technik werden die Proben mittels Pipettiernadeln im Batch-Betrieb in die Module gefördert.

Durch diese Betriebsweise ergeben sich jedoch folgende Nachteile:
Die Durchführung dieses Verfahrens ist sehr zeitaufwändig. Es können nur kleine Volumina beaufschlagt werden, und die Qualität insbesondere der chromatographischen Behandlung oder des erhaltenen Eluats erreichen nicht die erwünschte Güte.
Ein weiterer Nachteil ist eine nur indirekte Kontrolle der Durchflussgeschwindigkeit der Flüssigkeit durch das Modul und des Druckes auf die aufgegebene Flüssigkeit
Eine kontinuierliche Aufgabe von größeren Probenmengen ist durch die Beschränkung des Modul- oder Kit-Volumens nicht möglich.

Es ist daher die Aufgabe der Erfindung ein Verfahren und eine Vorrichtung zu schaffen, mit denen in vorgegebener Zeit eine größere Probenmenge vorzugsweise in einem Schritt, oder eine Anzahl mehrerer Proben in Serie durchgesetzt werden kann. Die Qualität der durchgeführten Untersuchungen, die Zeitersparnis und Handhabung sowie die Qualität der erhaltenen Proben soll verbessert werden.

Ausgehend vom Oberbegriff des Anspruchs 1 wird die Aufgabe erfindungsgemäß gelöst mit den im kennzeichnenden Teil des Anspruchs 1 angegebenen Merkmalen.

Insbesondere ist es nunmehr bei der Verwendung von Kits/Modulen möglich, größere Probenmengen in kürzerer Zeit mit einer verbesserten Produktqualität durchzusetzen.

Vorteilhafte Weiterbildungen der Erfindung sind in den Unteransprüchen angegeben.

Die Figuren zeigen bevorzugte Ausführungsformen eines erfindungsgemäßen Adapters.

Es zeigt:
- Fig.1:: Einen einteiligen Adapter.
- Fig.2:: Einen zweiteiligen Adapter.
- Fig.3a)b):: Einen Adapter mit einem Zwei-Kanaleingang.
- Fig.4:: Eine Detaildarstellung des Adapters.
- Fig.5:: Eine beispielhafte Ausführungsform des erfindungsgemäßen Adap- ters.

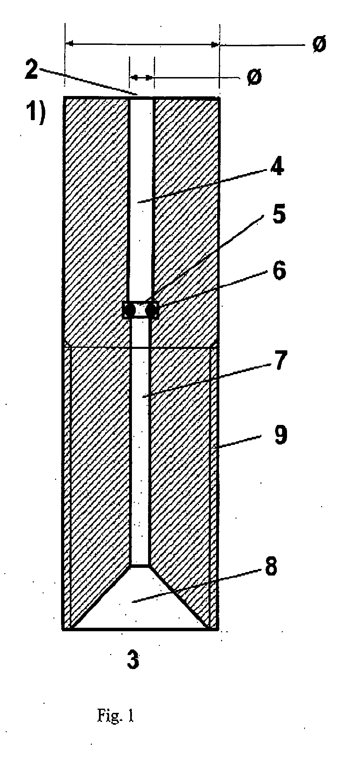

In Figur 1 ist eine einteilige Ausführungsform des erfindungsgemäßen Adapters 1 dargestellt. Er besitzt einen Eingang 2 und einen Ausgang 3. Der Eingang 2 mündet in eine obere Bohrung 4, die sich in einer unteren Bohrung 7 fortführt, welche sich in Form eines Trichters 8 aufweitet. In die Bohrung 4 kann eine Pipettiernadel aufgenommen werden. Im unteren Bereich des Adapters 1 ist fakultativ ein Gewinde 9 vorgesehen. In einem Hohlraum 5 zwischen der unteren und der oberen Bohrung 4,7 befindet sich ein 0-Ring 6, welcher eine Pipettiernadel aufnehmen kann und beispielhaft für ein Abdichtmittel ist.

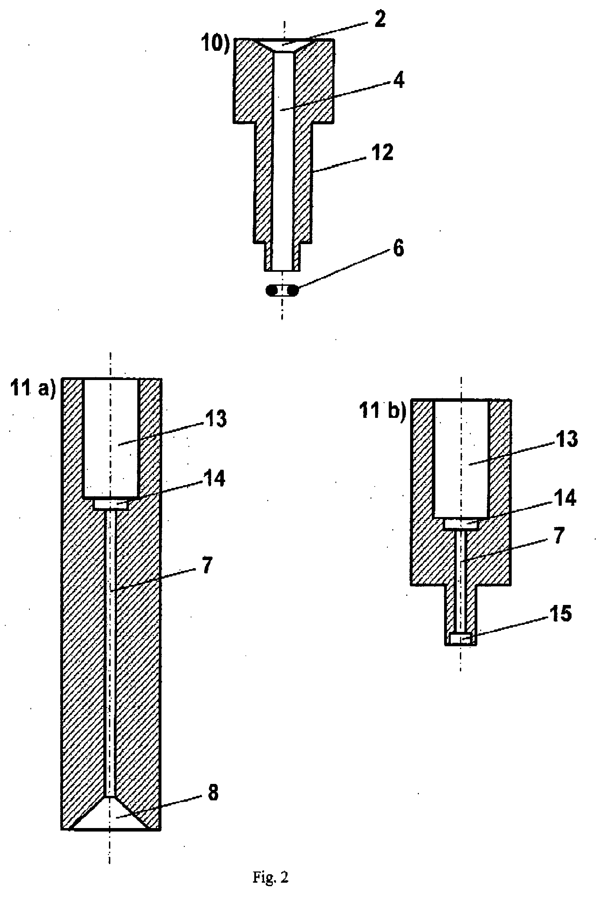

Figur 2 zeigt eine zweiteilige Ausführungsform des erfindungsgemäßen Adapters 1 mit verschiedenen Unterteilen 11a, 11 b und einem in diese Unterteile 11a, 11b einsetzbares Oberteil 10. Das Oberteil 10 besitzt einen trichterförmigen Eingang 2, für die Aufnahme einer Pipettiernadel. Es besitzt einen Bereich 12, welcher im Wesentlichen passschlüssig in den das Oberteil 10 aufnehmenden Bereich 13 des Unterteils einfügbar ist. Der das Oberteil 10 aufnehmende Bereich 13 des Unterteils 11a, 11b weist eine Verengung 14 auf, welche einen O-Ring aufnehmen kann. Der das Oberteil 10 aufnehmende Bereich 13 des Unterteils 11a, 11 b verengt sich in Form der unteren Bohrung 7, welcher die Pipettiernadel aufnehmen kann und durch den weiterhin die austretende Flüssigkeit strömt. Die untere Bohrung 13 weitet sich am Ausgang in Form eines Trichters 8 oder in Form einer zylindrischen Aufweitung 15 auf.

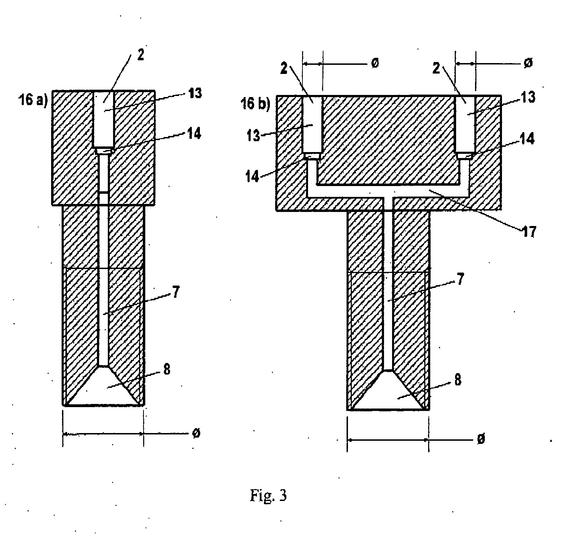

Figur 3 zeigt eine Ausführungsform des erfindungsgemäßen Adapters 1, welcher über zwei Eingänge 2 für die Flüssigkeit verfügt. Der Teil 16a) zeigt eine Seitenansicht und der Teil 16b) eine Aufsicht von vorne. In Figur 3 a)b) sind den gleichen Vorrichtungsmerkmalen dieselben Bezugszeicben zugeordnet. Es sind zwei eine Pipettiernadel aufnehmende Bereiche 13 über einen Mischkanal 17 mit der unteren Bohrung 7 verbunden.

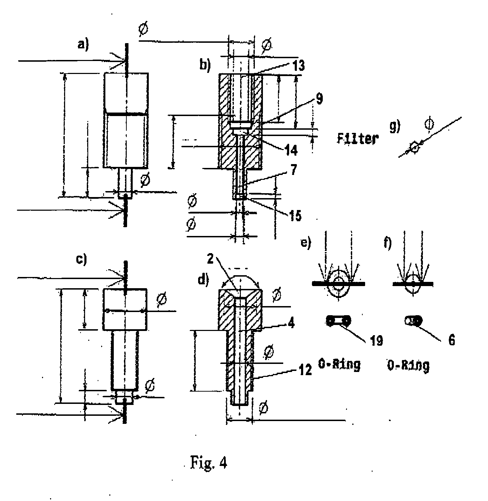

Figur 4 zeigt ein konkretes Ausführungsbeispiel für einen erfindungsgemäßen Adapter 1 in den Ansichten a), b), c) und d), wobei Figur a) und b) das Unterteil und Figur c) und d) das Oberteil der zweiteiligen Ausführungsform ist, sowie eine Darstellung der dazu passenden O-Ringe in den Figuren e) und f) und eines Filters in Figur g). Figur 4b) zeigt einen Schnitt von Figur 4a) und Figur 4d) zeigt einen Schnitt von Figur 4c). Auch hier haben die gleichen Vorrichtungsmerkmale dieselben Bezugszeichen.

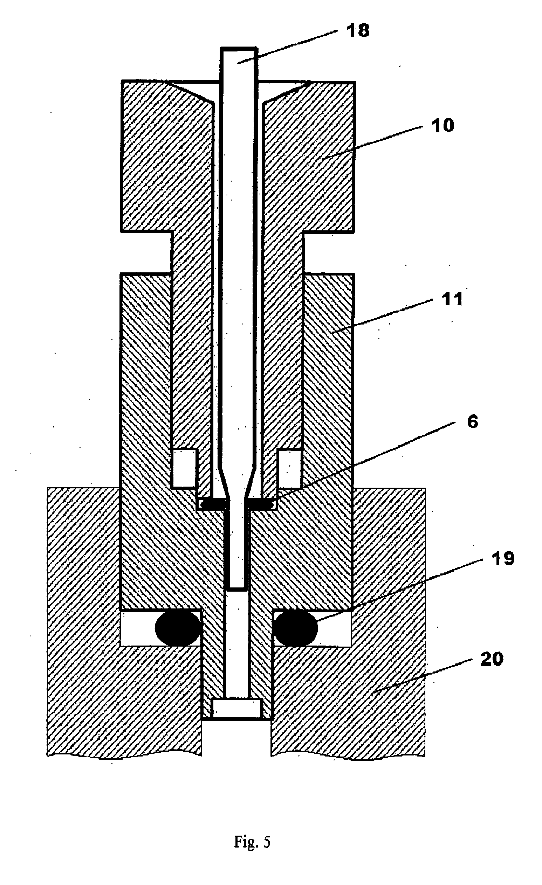

In Figur 5 ist ein erfindungsgemäßer Adapter mit einer Pipettiernadel 18 dargestellt, welche in das Oberteil 10 eines zweiteiligen Adapters eingesteckt ist und deren Spitze in das Unterteil 11 des zweiteiligen Adapters 1 ragt. Im Zwischenraum zwischen oberem und unterem Teil 10, 11 des Adapters befindet sich ein O-Ring 6. Der Adapter 1 ist auf ein Modul/Kit 20 aufgesteckt und gegenüber dem Eingangsbereich des Moduls/Kits 20 mit einem weiteren Q-Ring abgedichtet

Bei Gebrauch des erfindungsgemäßen Adapters wird eine flüssige Probe üblicherweise durch eine Pipettiernadel oder eine Pipettenspitze durch einen Adapter 1 in das Modul/Kit 20 eingebracht.

Unter einem Modul 20 im Sinne der Erfindung ist ein offener Behälter mit Aus- und Eintritt für Flüssigkeit, beispielhaft, aber nicht beschränkend, in Säulenform zu verstehen, welches mit einer stationären porösen Festphase gefüllt ist Der Boden dieses Gefäßes ist flussigkeitsdurchlassig. Die Festphase kann unterschiedlich ausgestaltet sein und kann beispielsweise, aber nicht beschränkend, ein Filter, eine Membran, ein flüssigkeitsverteilendes oder ein chromatographisches Trägermaterial sein.

Je nach Verwendungszweck des Moduls ist darunter insbesondere ein Kit zu verstehen. Unter einem Kit kann ein Analysen-Kit, beispielsweise, aber nicht beschränkend, ein Diagnostik-Kit, ein RNA-Isolierungs-Kit oder ein PCR-Kit oder Kits für die Separation oder Auf-Reinigung von Proteinen verstanden werden. Derartige Kits können im Bereich der Mikrobiologie, der Biotechnologie oder Medizintechnik angewendet werden. Das erfindungsgemäße Modul hat daher in einer bevorzugten Ausführungsform im Wesentlichen die für Kits üblichen Abmessungen.

Typische Zielanwendungen von Kits sind schnelle Trennung, gute Trennleistung und hohe Rückgewinnung von wertvollen Proben. Die typischerweise vorkommenden Formate von Kits sind Einzelstücke, 8er Streifen, 96er Mirotiterplatten (8x12) Kits. Die Funktion der Kits liegt beispielsweise in der selektiven Bindung (Adsorption) von bestimmten Proteinen auf einer meist festen Phase (auch Adsorbens genannt), z. B. Membran oder Chromatographieadsorberpartikel. Das Adsorbens kann selektiv bestimmte Proteine adsorbieren, alle anderen Proben durchfließen das Kit ohne zu binden. In einem zweiten Schritt können die gebundenen Proteine gelöst, eluiert bzw. desorbiert werden und liegen dann in einer besseren Reinheit vor. Alternativ kann das Produkt die durchfließenden Moleküle darstellen, während nicht erwünschte Bestandteile an der Festphase binden.

Im Folgenden wird der Begriff Pipettiernadel verwendet Er umfasst allerdings auch andere im Wesentlichen nadelförmige Konstruktionen, wie beispielsweise Pipettenspitzen, durch die Proben dosiert werden können.

Der Adapter 1 stellt eine flüssigkeitsdichte Verbindung zwischen der Pipettiernadel und dem Modul 20 her, durch den die Eingabe der Probe erfolgen kann.

Der Adapter 1 ist in einer Ausführungsform einteilig ausgebildet und umfasst einen Eingang 2 und einen Ausgang 3.

Der Ausgang 3 wird flüssigkeitsdicht mit dem Modul 20 verbunden. Zu diesem Zweck kann der Ausgang 3 bzw. der untere Teil des Adapters 1 passschlüssig und flüssigkeitsdicht in das Modul 20 einfügbar ausgebildet sein. Weiterhin kann wenigstens ein unterer Teilbereich des Adapters 1 ein Gewinde 9 besitzen, welches in den Eingang eines Moduls 20 eingeschraubt werden kann. Das Gewinde 9 ist beispielhaft für passgenau abdichtende Verbindungen.

Der Ausgang 3 des Adapters 1 ist zum flüssigkeitsdichten Verbinden mit dem Modul 20 vorzugsweise mit Dichtmitteln ausgestattet. Diese können beispielsweise ein O-Ring, Haftfolien, Folien oder ein Diaphragma sein. Denkbar ist auch ein Außengewinde, welches ggf. mit einer Dichtmasse umgeben ist.

Der Adapter 1 kann je nach Ausführung des Moduls ein fest sitzender integraler Bestandteil des Moduls bzw. Kits sein, so dass er untrennbar verbunden ist. Dies gilt sowohl für die einteilige, als auch für die zweiteilige Ausführungsform.

Der Ausgang 3 verfügt in einer bevorzugten Ausführungsform vorzugsweise über einen Probenaustritt, welcher eine Geometrie annimmt, die einen über den gesamten Querschnitt des Probenaustritts gleichmäßigen Flüssigkeitsaustritt ermöglicht. Dieser Flüssigkeitsaustritt ist vorzugsweise über die gesamte Eintrittsfläche des Moduls/Kits 20 gleichmäßig. Dies kann beispielsweise dadurch bewirkt werden, dass der Probenaustritt einen im Wesentlichen konisch auslaufenden Hohlraum, beispielsweise in Form eines Trichters 8 oder einen sich stufenförmig gestaltenden Hohlraum 15 ausbildet, welcher sich im Wesentlichen radialsymmetrisch vom Austrittsende nach innen hin verjüngt. Alternative Möglichkeiten zur gleichmäßigen Flüssigkeitsverteilung über den Austrittsquerschnitt können Einlagen, wie zum Beispiel Membranen, Lochplatten oder Filterscheiben sein. Diese sind beispielhaft für Mittel zur gleichmäßigen Flüssigkeitsverteilung über den Querschnitt des Ausgangs.

In einer bevorzugten Ausführungsform ist der Adapter 1 so ausgebildet, dass der Probenaustritt bzw. der Ausgang 3 mit dem Bodenteil des Moduls 20, beispielsweise dem Filter, der Membran oder der Chromatographie-Trägersubstanz kein Totvolumen oder ein geringes Totvolumen zulässt. Das bedeutet, dass der Probenaustritt bzw. der Ausgang 3 im Wesentlichen mit dem Boden des Moduls abschließt, bzw. dass sich nur ein kleines Flüssigkeitsvolumen, vorzugsweise ohne Gasphase, über dem Boden des Moduls befindet. Hierdurch wird eine besonders gute Qualität der Untersuchung oder des Verfahrens erreicht. Der Außendurchmesser des Ausgangs 3 entspricht im Wesentlichen dem Innendurchmesser des Moduls 20 und ist daher vorzugsweise an den Abmessungen von kommerziell verfügbaren und normierten Innendurchmessern der Kits orientiert. Die betragen beispielsweise 4 mm, 6 mm oder 6,5 mm. Es können aber auch frei wählbare Außendurchmesser realisiert werden, die den Innendurchmessern beispielsweise von selber gefertigen und nicht normierten Gefäßen entsprechen. Insgesamt kommt es auf die Funktion des flüssigkeitsdichten Kontaktes zwischen Adapter 1 und dem Modul 20 an.

In einer Ausführungsform ist der Eingang 2 des Adapters 1 so ausgebildet, dass er eine flüssigkeitsdichte Aufnahme der Probe ermöglicht.

Hierzu kann der Innendurchmesser des Eingangsbereichs des Adapters 1 im Wesentlichen dem Außendurchmessers der Pipettiernadel entsprechen, so dass idealerweise eine passschlussige Verbindung zustande kommt Alternativ oder zusätzlich kann der Adapter 1 an seinem Eingang 2 mit einem Septum flüssigkeitsdicht abgedichtet sein.

Die Bohrung 4 kann einen größeren Innendurchmesser besitzen als die Bohrung 7.

In einer bevorzugten Ausführungsform wird beispielsweise in einer Verengung 14 ein O-Ring aufgenommen, welcher die Pipettiernadel umschließt. Vorzugsweise ist der Innendurchmesser des O-Rings kleiner als der Außendurchmesser der Pipettiernadel, so dass der 0-Ring die Pipettiernadel umfasst und abdichtet, so dass die Flüssigkeit nur in Fließrichtung fließen kann.

Weiterhin kann der Eingang 2 des Adapters 1 mit Dichtmitteln versehen werden, welche die flüssigkeitsdichte Eingabe der Probe in den Adapter 1 ermöglichen. Diese Dichtmittel können wiederum O-Ringe oder Diaphragmen oder Haftfolie sein.

In einer alternativen Ausführungsform kann der Eingang 2 mit einer flüssigkeitsdichten Verbindung ausgestattet sein, welche das Anbringen einer schlauchförmigen Probenzuleitung ermöglicht. Bei dieser Probenzuleitung kann es sich um eine flexible, vorzugsweise druckbeständige Leitung handeln, die beispielsweise einen Anschluss an ein Pumpensystem zur Flüssigkeitsförderung oder an andere dem Modul/Kit 20 vorgeschaltete Verfahrensschritte ermöglicht.

Derartige Leitungen können beispielsweise durch Quetschverschraubungen mit Überwurfmuttern und ggf. zusätzlichen Dichtmitteln befestigt werden.

Vorzugsweise wird zum einen der Adapter gegen das Modul 20 und zum anderen die Pipettiernadel gegen den Adapter abgedichtet.

Der mit dem Modul 20 verbundene Adapter 1 lässt vorzugsweise eine Innendruckbelastung von 0,2 MPa zu, besser bis zu 0,3 oder 0,5 MPa, ganz besonders bevorzugt 1 WPa.

In einer weiteren Ausführungsform ist der Adapter 1 zweiteilig ausgebildet und umfasst einen unteren, dem Modul 20 zugewandten Teil und einen oberen getrennten Eingangsteil. In diesem Fall ist es möglich, verschiedene Eingangs- und Ausgangsteile miteinander zu kombinieren, so dass der Adapter 1 vielseitig verwendet werden kann.

Der obere und untere Teil 10, 11 des zweiteiligen Adapters 1 kann beispielsweise durch eine Schraubverbindung oder eine Steckverbindung miteinander verbunden werden. Diese Verbindung ist wiederum bevorzugt flüssigkeitsdicht ausgebildet und umfasst vorzugsweise Dichtmittel. Sie ist vorzugsweise in gleicher Weise druckbeständig, wie die einteilige Form.

In einer weiteren Ausführungsform der Erfindung kann der Eingang 2 des Adapters 1 so ausgestaltet sein, dass er mindestens zwei Pipettiernadeln oder Zuleitungen aufnehmen kann. Allgemein kann ein Adapter 1 n Eingänge aufweisen, welche in einen Mischkanal 17 einmünden, so dass ein Vermischen von verschiedenen Komponenten möglich ist. n kann dabei 10-2, vorzugsweise 5 - 2, besonders bevorzugt 2 sein. Dies ermöglicht das miteinander Vermischen von verschiedenen Probenflüssigkeiten. Die Zuleitung dieser Flüssigkeiten kann bestimmten Dosierregeln folgen, so dass definierte Zusammensetzungen erreicht werden können. In einer Weiterentwicklung der Erfindung können mindestens zwei Adapter 1 zusammen angeordnet sein, so dass eine Mehrzahl von Modulen 20, die in Reihen oder einem vorzugsweise rechtwinkligen Raster angeordnet sind, gleichzeitig bedient werden können.

Diese Anordnung kann 2,4,8,96 oder mehr Adapter 1 in einer Reihe oder einer anderen Anordnung, beispielsweise einem Kreis oder Kreisabschnitt oder einer anderen Rundung beinhalten. Unter einem Adapter ist in diesem Fall sowohl ein Adapter als auch die Anordnung mittels eines Mischkanals 17 zu verstehen. Bevorzugt ist eine Anordnung in Reihen oder rechteckigen Strukturen.

Der erfindungsgemäße Adapter ermöglicht einen kontinuierlichen Betrieb, indem die Probe in einem kontinuierlichen Prozess vorzugsweise unter Druckbeaufschlagung in das Kit oder Modul 20 eingegeben wird. Hierdurch entfällt die Notwendigkeit des Batchbetriebes, bei dem das Modul 20 entweder wiederholt durch Absaugen oder Beaufschlagen mit Druck, der nach Entfernung der Pipette beaufschlagt wird, entleert wird. Es kann ebenfalls auf eine Zentrifugation verzichtet werden. Bei all diesen Verfahrenschritten handelt es sich um zeit- und material- bzw. maschinenaufwendige Schritte, die eingespart werden können. Eine Fraktionierung der aufgegebenen Proben kann entfallen.

Von der Erfindung ist auch ein Verfahren zur Befüllung von Modulen 20 umfasst, bei dem die in die Module 20 eindosierten Proben erfindungsgemäß im Durchflussbetrieb in die Module eingefüllt werden. Das Verfahren ist insbesondere dadurch gekennzeichnet, dass die Proben durch eine Pipettiernadel kontinuierlich und flüssigkeitsdicht in das Modul 20 eingeführt werden. Hierzu wird die Probe im kontinuierlichen Betrieb in das Modul 20 gefördert. Die Probe wird hierbei mittels einer Pumpe durch eine Pipettiernadel über eine flüssigkeitsdichte Verbindung in das Modul 20 gefördert und durchläuft dieses. Der Boden des Moduls 20 kann als Filter, Membran oder Adsorbens ausgebildet sein. Die Probe verlässt danach das Modul 20 und kann weiteren Verfahrensschritten zugeführt werden. Vorzugsweise wird die Probe über einen erfindungsgemäßen Adapter geleitet.

Weiterhin können verschiedene Proben parallel einem Modul 20 zugeführt werden, in dem sie sich Vermischen.

Weiterhin können mit dem erfindungsgemäßen Verfahren verschiedene Module zeitgleich parallel in Serie angefahren werden, so dass die Produktivität erhöht werden kann.

Ein besonderer Vorteil ist die Qualitätsverbesserung der Untersuchung oder des Verfahrens. Diese Qualitätsverbesserung wird z. B. durch den störungsfreien Durchtritt der Probe durch das Medium, beispielsweise dem Filter, dem chromatographischen Feststoff oder der Membran bewirkt, da ein ununterbrochener Flüssigkeitsstrom zu den besten Trenn- oder Eluierungsergebnissen führt. Insbesondere in der Chromatographie ist der störungsfreie Verlauf eine wichtige Maßnahme zur Qualitätssicherung. Es können genaue Durchflussparameter eingestellt werden, beispielsweise in dem eine Förderpumpe nach den Bedürfnissen fördert. Erstmals ist für die Beschickung von Kits oder Modulen 20 eine Mischdosierung der Probe möglich, durch die Einstellung von Elutionsbedingungen in Gradienten oder Stufenform ermöglicht wird. Weiterhin können miteinander reagierende Proben oder Substanzen vermischt werden.

Mit dem erfindungsgemäßen Adapter 1 können Proben in Kits bzw. Module 20 aufgegeben werden. Die Anwendungen sind insbesondere Charakterisierung und Entwicklung von Modulen/Kits 20, Untersuchung der Verfahren, die durch diese Module/Kits 20 dargestellt werden oder die Anwendung dieser Module/Kits 20 zur Behandlung oder Reinigung von Proben.

In dieser Erfindung wurde ein Adapter konstruiert, der es erlaubt mit kommerziell erhältlichen und auf HTS Plattformen verwendeten Formaten an Pipettierspitzen direkt kleine Säulen oder säulenartige Behältnisse anzufahren und diese im Durchflussmodus zu betreiben. Der Adapter kann als Einzelstück, Streifen (lineare Kombination von Adaptern) oder im multi-well Format angewendet werden. Der Adapter bietet auf der unteren Seite die Möglichkeit, ihn an alle gängigen Formate von multi-well Platten, Säulen, Membranstapel oder Behältnisse abzuschließen, während er durch eine Dichtungseinrichtung am oberen Ende durch Pipettierspitzen angefahren werden kann. Die Flüssigkeitsverteilung am unteren Ende wird durch gängige Techniken, wie z. B. konischer Auslauf, Membran/Filterabschluss, Verteilerplatte je nach Anwendung realisiert.

Dies bietet folgende Vorteile:
- Durchflussanwendungen werden möglich.
- Extreme Zeitersparnis für Screening und HTS Anwendungen.
- Die Aufgabemenge ist nur durch die Pumpenkapazität begrenzt und beträgt ein Vielfaches bisheriger Aufgabemenge.
- Genaue Einstellungen der Flussraten sind möglich.
- Sehr genaue und schnelle Probenfraktionierung wird möglich.
- Elutionsprozesse erzielen bessere Ergebnisse
- Ein direkter Vergleich zu skalierbaren Techniken, die im Durchfluss betrieben werden, wird möglich.

Für eine Validierung und zur Aufnahme weiterer Messgrößen ist es wünschenswert die jeweilige Applikation auch an gängige Chromatographiesysteme anzuschließen. Daher bietet der obere Adapterteil die Möglichkeit gängige Anschlüsse von Chromatographiesysteme anzuschließen und die jeweilige Applikation mit diesen zu betreiben.

Um sich über die Zeit ändernde Flüssigkeitsgemische applizieren zu können (Elutionsstudien) besteht weiterhin die Möglichkeit den einkanaligen Adapter auf eine zweikanalige Struktur zu erweitern. Dies ermöglicht dann eine fast Totvolumen freie Vermischung zweier Ströme, die respektive durch zwei Zugabepipetten oder andere Anschlüsse aufgegeben werden.

### • Ansführungsbeispiel(e)

### Chromatographie:

Der Adapter erlaubt die Ansteuerung miniaturisierter Chromatographiesäulen, um diese unter Durchfluss zu betreiben. Dies erlaubt eine Parallelisierung von Chromatographieexperimenten, die analog zu allen gängigen Techniken im Labormaßstab auf Pipettierplattformen (HTS Applikationen) durchgeführt werden können. Durch diese Technik können bessere Ergebnisse bei der Aufreinigung von Molekülen im Mirkomaßstab erzielt werden, da das Trennpotential von Säulen ausgenutzt werden kann. Weiterhin erlaubt diese Technik eine parallelisierte Nutzung von Säulen zur Entwicklung von Chromatographieprozessen. Die Technik erlaubt es weiterhin, verschiedene Chromatographiematerialien auf ihre Qualität für verschiedene Anwendungen zu testen.

### Membranchromatographie:

Ein weiteres Beispiel findet sich in der kontinuierlichen Ansteuerung von Membranen oder Membranstapeln. Die Applikationsbandbreite ist ähnlich der oben beschriebenen. Die Technik erlaubt es weiterhin, verschiedenste Membranmaterialien auf ihre Qualität für verschiedene Anwendungen zu testen.

### Filtration:

Filterplatten können durch diese Methode kontinuierlich beladen werden und so größere Mengen an zu filterndes Material appliziert werden. Dies eignet sich sowohl um eine größere Menge an Filtrat als auch Retentat (z. B. Zellen, Inclusion bodies) zu generieren. Die Technik erlaubt es weiterhin, verschiedene Filtermaterialien auf ihre Qualität für verschiedene Anwendungen zu testen.

## Patentansprüche

1. Adapter,
**dadurch gekennzeichnet,**
**dass** er eine flüssigkeitsdichte Aufnahme einer Spritzennadel (18) ermöglicht und flüssigkeitsdicht mit einem Modul bzw. Kit (20) abschließt, auf das er aufgesetzt bzw. eingesetzt wird und dass der untere Bereich des Adapters 1, der in das Modul (20) eingefügt werden kann, so dimensioniert ist, dass er mit dem Boden des Moduls (20) im Wesentlichen keinen Totraum bildet.

2. Adapter nach Anspruch 1,
**dadurch gekennzeichnet,**
**dass** er einen Eingang (2) besitzt.

3. Adapter nach Anspruch 1 oder 2,
**dadurch gekennzeichnet,**
**dass** der Eingang (2) trichterförmig ausgebildet ist.

4. Adapter nach einem der Ansprüche 1 bis 3,
**dadurch gekennzeichnet,**
**dass** der Eingang (2) mit Dichtmitteln ausgestattet ist.

5. Adapter nach einem der Ansprüche 1 bis 4,
**dadurch gekennzeichnet,**
**dass** sich der Eingang (2) in einer Bohrung (4) für die Aufnahme der Spritzennadel (18) fortführt.

6. Adapter nach einem der Ansprüche 1 bis 5,
**dadurch gekennzeichnet,**
**dass** er über Dichtmittel verfügt, welche eine in den Adapter 1 eintretende Spritzennadel (18) flüssigkeitsdicht umschließt.

7. Adapter nach Anspruch 6,
**dadurch gekennzeichnet,**
**dass** das Dichtmittel ein O-Ring ist.

8. Adapter nach Anspruch 5,
**dadurch gekennzeichnet, dass** sich die Bohrung (4) in einer Bohrung (7) fortführt, welche die Spitze der Spritzennadel (18) aufnimmt.

9. Adapter nach einem der Ansprüche 1 bis 8,
**dadurch gekennzeichnet,**
**dass** die Bohrung (4,7) in einen Ausgang (3) mündet.

10. Adapter nach Anspruch 9,
**dadurch gekennzeichnet,**
**dass** der Ausgang (3) mit Mitteln (8) ausgestattet ist, welche einen gleichmäßigen Austritt eines Flüssigkeitsvolumens über den gesamten Querschnitt ermöglicht.

11. Adapter nach Anspruch 10,
**dadurch gekennzeichnet,**
**dass** sich der Ausgang (3) nach unten aufweitet.

12. Adapter nach Anspruch 11,
**dadurch gekennzeichnet,**
**dass** die Aufweitung trichterförmig (8) oder zylindrisch ausgestaltet ist.

13. Adapter nach einem der Ansprüche 10 bis 12,
**dadurch gekennzeichnet,**
**das** der Ausgang (3) mit einer Membran, einer Lochplatte oder einer Filterscheibe ausgestattet ist.

14. Adapter nach einem der Ansprüche 1 bis 13,
**dadurch gekennzeichnet,**
**dass** er in der dem Modul (20) zugewandten Seite Dichtmittel aufweist, mit denen er füssigkeitsdicht mit dem Modul (20) in Verbindung gebracht werden kann.

15. Adapter nach einem der Ansprüche 1 bis 14,
**dadurch gekennzeichnet,**
**dass** er über mindestens zwei Eingänge (2) verfügt, welche zu einem Mischkanal (17) zusammengeführt werden, der in die Bohrung (7) eintritt.

16. Adapter nach einem der Ansprüche 1 bis 15,
**dadurch gekennzeichnet,**
**dass** er zweistückig mit einem Oberteil (10) und einem Unterteil (1)1 ausgebildet ist.

17. Adapter nach Anspruch 16,
**dadurch gekennzeichnet,**
**dass** das Oberteil (10) und das Unterteil (11) flüssigkeitsdicht miteinander verbunden sind.

18. Adapter nach einem der Ansprüche 1 bis 16,
**dadurch gekennzeichnet,**
**dass** mindestens zwei Adapter (1) zusammen angeordnet sind.

19. Adapter nach Anspruch 18,
**dadurch gekennzeichnet,**
**dass** die Adapter (1) miteinander verbunden sind.

20. Adapter nach Anspruch 18 oder 19,
**dadurch gekennzeichnet,**
**dass** eine Mehrzahl von Adaptern (1) in geometrischen Anordnungen angeordnet sind.

21. Adapter nach Anspruch 20,
**dadurch gekennzeichnet,**
**dass** die Anordnung ein rechtwinkliges Raster, ein Kreis oder Kreisabschnitt, ein Bogen oder eine Reihe ist.

22. Adapter nach einem der Ansprüche 18 bis 21,
**dadurch gekennzeichnet,**
**dass** die Anordnung 2 ,4, 8 oder 96 Adapter (1) umfasst.

23. Adapter nach eine der Ansprüche 1 bis 22,
**dadurch gekennzeichnet,**
**dass** er flüssigkeitsdicht auf einem Kit (20) aufzubringen ist.

24. Adapter nach einem der Ansprüche 1 bis 23,
**dadurch gekennzeichnet,**
**dass** er untrennbar mit dem Modul/Kit (20) verbunden ist.

25. Adapter nach einem der Ansprüche 1 bis 24,
**dadurch gekennzeichnet,**
**dass** der Eingang (2) mit Dichtmitteln versehen ist, welche eine flüssigkeitsdichte Eingabe einer Probe ermöglichen.

26. Adapter nach Anspruch 25,
**dadurch gekennzeichnet,**
**dass** der Eingang (2) mit einer flüssigkeitsdichten Verbindung ausgestattet ist, welche das Anbringen einer schlauchförmigen Probenzuleitung ermöglicht.
